# EUROPEAN PATENT APPLICATION

(11) **EP 2 458 699 A1**
(43) Date of publication of application: **30.05.2012**
(21) Application number: 10192686.3
(22) Date of filing: 26.11.2010
(51) Int. Cl.: H02G 3/04, H02G 11/00

(54) **Cable arrangement and method**

(71) Applicant: Axis AB, 223 69 Lund (SE)
(72) Inventor: Pahlitzsch, Jens, 224 57, Lunc (SE); Helaoui, Samir, 211 50, Malmö (SE)
(74) Representative: Bergstrand, Mikael Gudmundsson

(57) **Abstract**

The present invention relates to assembling an arrangement. The arrangement comprises a plurality of cables (2), a cable holder (1) for holding the plurality of cables (2), a turnable image acquisition device (3), and a processing unit (4), wherein the plurality of cables (2) are arranged to connect the turnable image acquisition device (3) and the processing unit (4), wherein the cable holder (2) is helical, and wherein the plurality of cables (2) are loosely fitted in the cable holder (1).

## Description

### Technical field

The present invention relates to an arrangement and to a method for assembling the arrangement. The arrangement comprises a plurality of cables, a cable holder for holding the plurality of cables, a turnable image acquisition device, and a processing unit, wherein the plurality of cables are arranged to connect the turnable image acquisition device and the processing unit.

### Background art

Network cameras usually have a bundle of thin signaling wires that connect the camera head and the Printed Circuit Board (PCB). The wires need to be long enough to ensure that the camera head can both pan and tilt the full specified distance. Still, the wires need to be as short as possible so that they do not take up more space than necessary in the small space available. Additionally, the wires need to be very flexible in all directions not to put on extra load on the pan and tilt motors. Furthermore, the signaling wires need to be gathered to ensure that they do not get entangled or get caught in other parts of the camera.

A solution to this is to wrap the wires with tape. However, the tape wrapping makes the bundle of thin signaling wires stiff and thus reduces the ability of the camera to pan/tilt and puts unnecessarily large load on the pan/tilt motors.

### Summary of the invention

In view of the above, an objective of the invention is to solve or at least reduce one or several of the drawbacks discussed above. Generally, the above objective is achieved by the attached independent patent claims.

According to a first aspect, the present invention is realized by an arrangement comprising a plurality of cables, a cable holder for holding the plurality of cables, a turnable image acquisition device, and a processing unit. The plurality of cables are arranged to connect the turnable image acquisition device and the processing unit. The cable holder is helical and the plurality of cables are loosely fitted in the cable holder.

This is advantageous in that the cables are held in place by the cable holder and do not get entangled or get caught in other parts of the arrangement. Furthermore, the plurality of cables are able to move freely inside the cable holder and hence do not put on extra load on the pan and tilt motors.

The cable holder may be pliant. This is advantageous in that that the cable holder easily bends and, hence, does not put on extra load on the pan and tilt motors.

The cable holder may be a coil spring. This is advantageous in that the cable holder is very flexible in all directions since the cable holder easily bends at every winding.

The cable holder may be made of a material chosen from the group of a metal, a plastic, a rubber, or a silicone. Metal is advantageous in that it is robust. Plastic is advantageous in that it is easy to manufacture through, e.g., moulding or extrusion. Rubber and silicone are advantageous in that they are highly flexible.

According to a second aspect, the present invention is realized by a method for assembling an arrangement comprising a plurality of cables, a cable holder for holding the plurality of cables, a turnable image acquisition device, and a processing unit, wherein the cable holder is helical, and wherein the plurality of cables are loosely fitted in the cable holder. The method comprises: arranging the plurality of cables in the cable holder, connecting the turnable image acquisition device and the processing unit using the plurality of cables.

It is to be noted that the second aspect can be embodied in accordance with the first aspect. Furthermore, the advantages of the first aspect apply to the second aspect as well.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Other features and advantages of the present invention will become apparent from the following detailed description of a presently preferred embodiment, with reference to the accompanying drawings, in which
Fig. 1 is a perspective view of a cable holder and a plurality of cables that are part of the inventive arrangement.
Fig. 2 is a cross-sectional view of the cable holder and the plurality of cables of Fig. 1.
Fig. 3 is a schematic illustration of the inventive arrangement.

### Detailed description of preferred embodiments of the invention

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

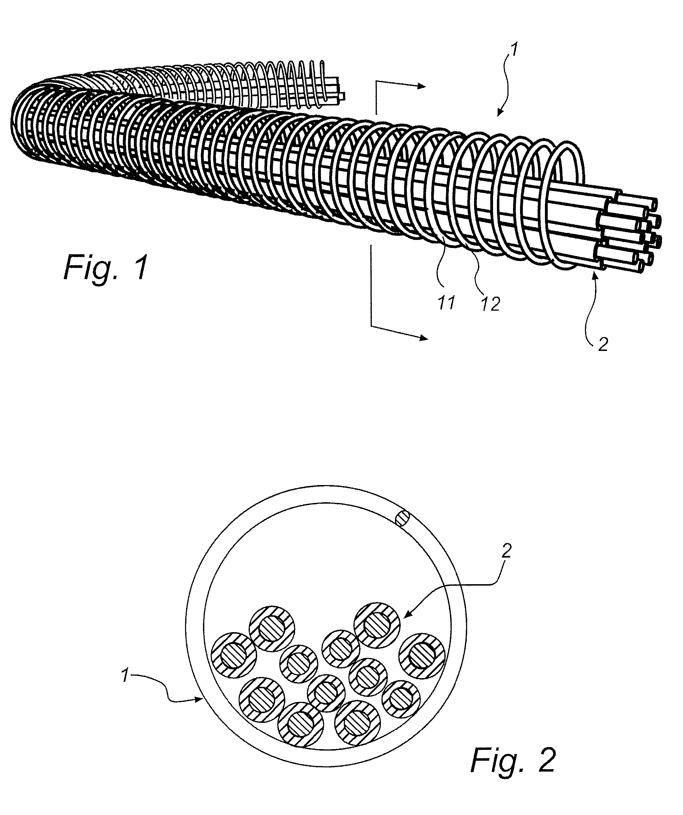

Fig. 1 discloses an inventive cable holder 1 and a plurality of cables 2. The plurality of cables 2 are arranged to connect a turnable image acquisition device (not shown) and a processing unit (not shown). The cable holder 1 is helically shaped or wound and the plurality of cables 2 are loosely fitted in the cable holder 1. Fig. 2 is a cross-sectional view of the cable holder 1 and the plurality of cables 2 of Fig. 1. It is clear, from both Figs. 1 and 2, that the plurality of cables 2 are loosely fitted in the cable holder 1. Thus the plurality of cables 2 are able to move freely inside the cable holder 1 and hence do not put on extra load on the pan and tilt motors.

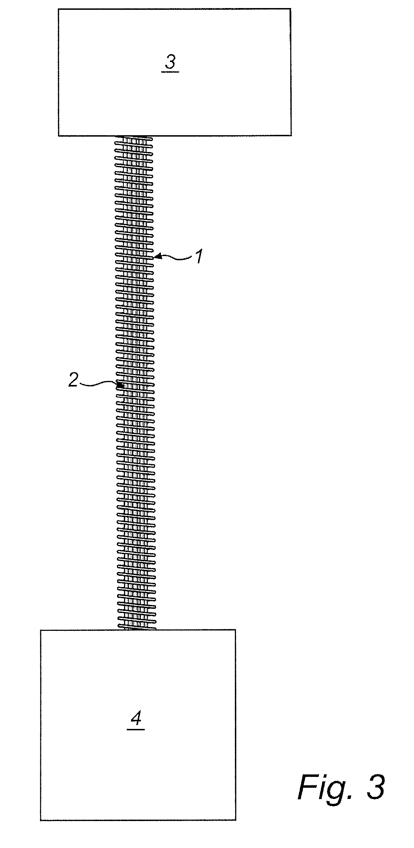

Fig. 3 schematically illustrates the inventive arrangement comprising the plurality of cables 2 arranged in the cable holder 1 and connecting a turnable image acquisition device 3 and a processing unit 4. The processing unit 4 can be any type of known processing unit, e.g., a PCB (Printed Circuit Board). The turnable image acquisition device 3 can, e.g., be a network camera that is arranged to pan and/or tilt. The turnable image acquisition device 3 can, e.g., be able to rotate more than 360 degrees.

In Fig. 3, a length of the cable holder 1 is substantially equal to a length of the plurality of cables 2. It is realized that the cable holder 1 can be shorter than the plurality of cables 2. In some embodiments the arrangement comprises a plurality of cable holders 1. The cable holder 1 can enclose an entire length of the plurality of cables 2. Alternatively, the cable holder 1 can enclose a part of a length of the plurality of cables. As a further alternative, a plurality of cable holders 1 can enclose a plurality of parts of the plurality of cables 2.

The arrangement is assembled by arranging the plurality of cables 2 in the cable holder 1 and connecting the turnable image acquisition device 3 and the processing unit 4 using the plurality of cables 2.

The plurality of cables 2 are held in place by the cable holder 1 and do not get entangled nor get caught in other parts of the arrangement. When the image acquisition device 3 rotates, the plurality of cables 2 are able to move freely inside the cable holder 1. Furthermore, the cable holder 1 is pliant and bends easily. Hence, the arrangement has the advantage that no extra load is put on the motor causing the rotating motion.

In one embodiment, illustrated in Fig. 1, the cable holder 1 is a coil spring. The windings of the coil spring simplify the bending of the coil spring.

The cable holder may 1 be made of a material chosen from the group of a metal, a plastic, a rubber, or a silicone. Metal is advantageous in that it is robust. Plastic is advantageous in that it is easy to manufacture through, e.g., moulding or extrusion. Rubber is advantageous in that it is highly flexible. Silicone is advantageous in that it is highly flexible.

A length of the cable holder 1 may be in the range of 10-400 mm.

A diameter of at least one of the plurality of cables 2 may be in the range of 0,1-2 mm.

A distance between two adjacent windings 11 and 12 of the cable holder 1 may be in the range of 0,1-5 mm.

A thickness of a winding 11 of the cable holder 1 may be in the range of 0,01-1 mm.

The ranges outlined above are suitable in arrangements comprising, e.g., small and/or compact network cameras.

The inventive cable holder 1 is particularly advantageous in arrangements comprising small turnable image acquisition devices 3 because such arrangements do not have space enough to incorporate large motors for providing rotation and/or tilt of the turnable image acquisition devices 3. Due to the required small size of the motors, the plurality of cables 2 and the cable holder 1 must not put on extra load on the motors and hence is the inventive arrangement particularly advantageous.

## Claims

1. Arrangement comprising a plurality of cables (2), a cable holder (1) for holding the plurality of cables (2), a turnable image acquisition device (3), and a processing unit (4), wherein the plurality of cables (2) are arranged to connect the turnable image acquisition device (3) and the processing unit (4), wherein the cable holder (1) is helical, and wherein the plurality of cables (2) are loosely fitted in the cable holder (1).

2. Arrangement according to claim 1, wherein the cable holder (1) is pliant.

3. Arrangement according to any of claims 1-2, wherein the cable holder (1) is a coil spring.

4. Arrangement according to any of claims 1-3, wherein the cable holder (1) is made of a material chosen from the group of a metal, a plastic, a rubber, or a silicone.

5. Arrangement according to any one of claims 1-4, wherein a length of the cable holder (1) is in the range of 10-400 mm.

6. Arrangement according to any one of claims 1-5, wherein a diameter of at least one of the plurality of cables (2) is in the range of 0,1-2 mm.

7. Arrangement according to any one of claims 1-6, wherein a distance between two adjacent windings (11, 12) of the cable holder (1), when the cable holder (1) is in an unbent state, is in the range of 0,1-5 mm.

8. Method for assembling an arrangement comprising a plurality of cables (2), a cable holder (1) for holding the plurality of cables (2), a turnable image acquisition device (3), and a processing unit (4), wherein the cable holder (1) is helical, and wherein the plurality of cables (2) are loosely fitted in the cable holder (1), the method comprising:
arranging the plurality of cables (2) in the cable holder (1),
connecting the turnable image acquisition device (3) and the processing unit (4) using the plurality of cables (2).
